# EUROPÄISCHE PATENTSCHRIFT

(11) **EP 2 395 259 B1**
(45) Veröffentlichungstag und Bekanntmachung des Hinweises auf die Patenterteilung: **07.11.2012**
(21) Anmeldenummer: 10006086.2
(22) Anmeldetag: 11.06.2010
(51) Int. Cl.: F16H 7/08

(54) **Spannvorrichtung mit Rastspange**
Tensioning device with stop bracket
Dispositif de mesure de position doté d'un agencement d'oscillation d'émetteur se croisant plusieurs fois

(43) Veröffentlichungstag der Anmeldung: 14.12.2011
(73) Patentinhaber: iwis motorsysteme GmbH & Co. KG, 81369 München (DE)
(72) Erfinder: Perissinotto, Renzo, 85221 Dachau (DE); Schmid, Tobias, 86875 Bronnen (DE); Bauer, Christian, 81671 München (DE)
(74) Vertreter: Grünecker, Kinkeldey, Stockmair & Schwanhäusser

(56) Entgegenhaltungen:
- DE-C1- 19 680 418
- DE-U1-202007 008 985
- US-A1- 2006 281 595

## Beschreibung

Die vorliegende Erfindung betrifft eine Spannvorrichtung für ein flexibles Antriebsmittel, insbesondere eine Antriebskette eines Verbrennungsmotors, mit einem Gehäuse, einem im Gehäuse verschiebbar geführten Spannkolben und einer Nachstelleinrichtung zum schrittweisen Nachstellen des Arbeitsbereichs des Spannkolbens, die Nachstelleinrichtung weist eine Rastspange und eine zugehörige Rastprofilierung am Spannkolben auf, wobei die Rastspange zwei Klemmabschnitte zum Eingriff in die Rastprofilierung am Spannkolben und einen die Klemmabschnitte verbindenden Federabschnitt aufweist.

Derartige kolbenbetätigte Spannvorrichtungen mit einer Nachstelleinrichtung sind weit verbreitet und werden insbesondere bei Steuerkettentrieben in Verbrennungsmotoren eingesetzt. Dabei bildet das Gehäuse zusammen mit einem hohlzylindrischen Spannkolben in der Kolbenbohrung des Gehäuses einen Druckraum aus, der üblicherweise mit einem Hydraulikmittel gefüllt ist und in dem eine Druckfeder angeordnet ist, um den Spannkolben vorzuspannen. Häufig weisen derartige Spannvorrichtungen Nachstelleinrichtungen in Form von Rastmechanismen auf, die für den Spannkolben eine Blockier- und eine Durchrutschrichtung definieren, wodurch ein zu tiefes Einfahren des Spannkolbens in das Gehäuse mittels eines Anschlags verhindert, aber eine Nachstellung des Arbeitsbereiches des Spannkolbens ermöglicht wird.

Eine derartige Spannvorrichtung mit einem herkömmlichen Rastmechanismus ist aus der DE 100 14 700 A1 bekannt, wobei der Spannkolben mit einer Sägezahnprofilierung versehen ist, in die durch einen Fensterausschnitt im Gehäuse ein Ratschenblock eingreift. Der freie Arbeitsbereich des Spannkolbens wird bei dieser Spannvorrichtung durch die axiale Bewegungsfreiheit des Ratschenblocks in dem Gehäusefenster begrenzt.

Eine gattungsgemäße Spannvorrichtung ist aus der US 2006/281595 A1 bekannt, die einen hydraulischen Kettenspanner mit einem Spannkolben zeigt, der in der Kolbenbohrung eines Spannergehäuses geführt wird. Zur Begrenzung der Einfahrbewegung des Spannkolbens greift ein Klemmring in ein an der Außenumfangsfläche des Spannkolbens vorgesehenes umlaufendes Rillenprofil ein. Dieser Klemmring weist ein Ringteil auf mit zwei sich überkreuzenden von dem Ringteil seitlich vorstehenden Armen, die sich durch eine Öffnung in dem Gehäuse erstrecken.

Der Spannkolben des Hydraulikspanners aus der DE 196 80 418 C1 weist mehrere axial zueinander beabstandete umlaufende Rastnuten auf, wobei auf dem Spannkolben eine Rastspange aufgeschoben ist, die anfänglich mittels eines ringförmigen Abschnitts der Rastspange in die oberste Rastnut des Spannkolbens eingreift. Für die Nachstellfunktion dieser ringförmigen Federklammer gibt es am Gehäuse eine untere angefaste Anschlagfläche sowie einen oberen in der Innenumfangsfläche der Gehäusebohrung eingelassenen Anschlagring. Dazwischen befindet sich ein ausreichender Arbeitsbereich in dem die Spannvorrichtung ihre Dämpfungswirkung entfalten kann. Zur Ausbildung der Anschläge weist die Rastspange einen U-förmigen Abschnitt sowie zwei Endschenkel auf, die sich radial vom ringförmigen Klemmabschnitt nach außen erstrecken und sich im Arbeitsbereich des Spannkolbens in entsprechenden Gehäusefenstern zwischen dem unteren Anschlag und dem oberen Anschlagring bewegen. Bei einer Nachstellung des Arbeitsbereichs des Spannkolbens schlägt die Rastspange am oberen Anschlagring an und der durch die verschleißbedingte Längung der Kette weiter ausfahrende Spannkolben spreizt den ringförmigen Abschnitt der Rastspange radial auf und schiebt bei einer ausreichenden Ausfahrbewegung die Rastspange in die nächste Nut der Rastprofilierung. Zur Aufspreizung des ringförmigen Abschnitts der Rastspange werden dessen zwei bogenförmige Klemmabschnitte im Bereich des U-förmigen Abschnitts auseinander gebogen. Um dabei eine reversible federelastische Biegung sicherzustellen, darf der Durchmesser des für die Rastspange verwendeten Runddrahts eine vom Durchmesser des Spannkolbens und der Aufbiegung des ringförmigen Klemmabschnitts abhängige Dicke nicht überschreiten. Schlägt der ringförmige Abschnitt der Rastspange bei einer Einfahrbewegung des Spannkolbens gegen die untere angefaste Anschlagfläche an, so wird der ringförmige Abschnitt der Rastspange in die Rastnut gepresst und die Einfahrbewegung des Spannkolbens in das Gehäuse blockiert. Größere Durchmesser des Runddrahts können die Klemmwirkung der Rastspange bei der Blockierung der Einfahrbewegung verbessern.

Die Druckschrift DE 20 2007 008 985 U1 beschreibt eine weitere Spannvorrichtung mit einem Federringelement, das zwischen dem Gehäuse und dem Spannkolben wirkt und sowohl zum schrittweisen Nachstellen des Arbeitsbereichs des Spannkolbens als auch zur Transportsicherung einsetzbar ist. In einer Ausführungsform weist das Federelement ein sich um den Spannkolben erstreckenden Ringabschnitt mit einer Öffnung auf, von der aus zwei Enden des Federelements nach außen vorstehen. An der gegenüberliegenden Seite weist das Federelement einen U-förmigen Abschnitt auf, der durch die Außenwandung des Gehäuses radial nach außen vorsteht.

Spannvorrichtungen mit Nachstelleinrichtungen zur Begrenzung der Einfahrbewegung eines Spannkolbens und einer gleichzeitigen Definition des freien Arbeitswegs des Spannkolbens sind in unterschiedlichen Konzepten und Ausführungsformen in der Technik weit verbreitet und haben sich im Einsatz gut bewährt. Leider erfordert die Nachstelleinrichtung bei diesen Spannvorrichtungen üblicherweise einen relativ komplexen Aufbau und eine genaue Abstimmung auf dessen Funktionen sowie eine individuelle Herstellung der notwendigen Komponenten.

Die in der Technik bekannten Spannvorrichtungen mit Nachstelleinrichtungen gibt es in einer Vielfalt von Konzepten mit auf den jeweiligen Anwendungsfall ausgerichteten Ausführungsformen. Die fortschreitende technische Entwicklung bedingt jedoch auch bei in der Technik bereits gut eingeführten Produkten einen stetigen Innovationsdruck bestehende Konstruktionen zu verbessern. Dabei besteht im Hinblick auf den gerade in der Automobilindustrie steigenden Kostendruck in Verbindung mit hohen Stückzahlen generell ein ständiger Optimierungsbedarf und das Bestreben durch Synergieeffekte Kosten zu reduzieren.

Der vorliegenden Erfindung liegt daher die Aufgabe zugrunde, eine Spannvorrichtung für ein flexibles Antriebsmittel mit einer Nachstelleinrichtung bereitzustellen, dessen Konstruktion bei einer sicheren Funktion durch einen möglichst einfachen Aufbau und Montage eine kostengünstige Herstellung ermöglicht.

Diese Aufgabe wird bei einer gattungsgemäßen Spannvorrichtung für ein flexibles Antriebsmittel erfindungsgemäß dadurch gelöst, dass der Federabschnitt mindestens einen als Torsionsstab ausgebildeten Torsionsbereich aufweist, der die Klemmabschnitte federelastisch verbindet, wobei die Achse des Torsionsstabs in einem Winkel zu der Ebene des seitlichen Auseinanderbewegens der Klemmabschnitte angeordnet ist, und beim seitlichen Auseinanderbewegen der Klemmabschnitte in einer Ebene einen Torsionsfederweg ausführt.

Die erfindungsgemäße Ausgestaltung einer Spannvorrichtung ermöglicht eine sichere reversible Aufweitung des Klemmbereichs der Rastspange bei der Nachstellung des Arbeitsbereichs des Spannkolbens. Im Gegensatz zu herkömmlichen Rastspangen, bei der eine Aufweitung der Klemmabschnitte der Rastspange ausschließlich durch eine Biegung des die beiden Klemmabschnitte verbindenden Federabschnitts der Rastspange erfolgt, ermöglicht die erfindungsgemäße Ausgestaltung der Spannvorrichtung im Torsionsstab zusätzlich einen Torsionsfederweg und damit eine geringere Biegebelastung in dem Federabschnitt. Durch die reduzierte Biegebelastung wird eine plastische Verformung des Federabschnitts sicher verhindert, insbesondere bei einem U-förmig ausgebildeten Federabschnitts der Rastspange. Dadurch werden die Funktionssicherheit und die Betriebszeit der Spannvorrichtung erhöht. Darüber hinaus erlaubt die Reduzierung der Biegebelastung im Biegebereich die Verwendung größerer Materialstärken, beispielsweise eines größeren Runddrahtquerschnittes bei Runddraht-Rastspangen. Eine größere Materialstärke bzw. ein größerer Querschnitt der Rastspange vergrößert die Klemmfläche der Rastspange in der Rastprofilierung auf dem Spannkolben und verbessert dadurch die Klemmfunktion zur Blockierung der Einfahrbewegung des Spannkolbens.

Das seitliche Auseinanderbewegen der Klemmabschnitte in der Ebene des seitlichen Auseinanderbewegens der Klemmabschnitte ermöglicht eine gleichmäßige Öffnung des Klemmbereichs der Rastspange beim Nachstellen des Arbeitsbereiches des Spannkolbens kann der Federabschnitt die Klemmabschnitte derart federelastisch verbinden, wobei der Torsionsbereich einen Torsionsfederweg ausführt. Dabei ist der Torsionsfederweg der von dem Federabschnitt zurückgelegte Weg zur Erreichung einer bestimmten elastischen Federarbeit der auf den Torsionsbereich und dessen Federkraft zurückzuführen ist.

In einer vorteilhaften Ausführung kann der Federabschnitt weiter mindestens einen Biegebereich aufweisen und der Federabschnitt die Klemmabschnitte derart federelastisch verbinden, dass beim seitlichen Auseinanderbewegen der Klemmabschnitte in einer Ebene der Torsionsbereich einen Torsionsfederweg und der Biegebereich einen Biegefederweg ausführt. Dabei ist der Biegefederweg der von dem Federabschnitt zurückgelegte Weg zur Erzielung einer elastischen Federarbeit der auf den Biegebereich und dessen Federkraft zurückzuführen ist. Der ergänzende Biegebereich des Federabschnitts ermöglicht eine sichere gleichmäßige federelastische Verbindung der Klemmabschnitte mit einem geringen Risiko einer plastischen Verformung des Federabschnitts, bzw. einer Aufweitung der zwei Klemmabschnitte.

Um eine möglichst hohe Steifigkeit der Rastspange für ein sicheres Einklemmen des Spannkolbens bei der Blockierung der Einfahrbewegung zu ermöglichen, kann sich beim seitlichen Auseinanderbewegen der Klemmabschnitte in einer Ebene der Torsionsfederweg stärker auf die federelastische Bewegung der Klemmabschnitte auswirken als der Biegefederweg.

Für eine besonders einfache Ausbildung des Torsionsbereichs kann die Achse des Torsionsstabs in einem Winkel zu der Ebene des seitlichen Auseinanderbewegens der Klemmabschnitte angeordnet sein, wobei die Achse in einem Winkel zwischen 45° und 90°, bevorzugt zwischen 75° und 90°, angeordnet ist. Neben der einfachen Form des Torsionsbereichs ermöglicht die Neigung des Torsionsstabs eine einfache Einstellung des Verhältnisses von Torsionsfederweg und Biegefederweg, wobei der Anteil des Torsionsfederwegs mit steigenden Winkel ansteigt und bei einer senkrechten Anordnung seinen Höchstwert erreicht.

In einer besonderen Ausführung weist der Federabschnitt mindestens zwei Torsionsbereiche auf, die durch eine Zuordnung zu den zwei Klemmabschnitten der Rastspange die Federelastizität des Federabschnitts erhöhen und eine gleichmäßige Verteilung der Torsion auf die zwei Klemmabschnitte ermöglichen.

Zweckmäßigerweise kann der Federabschnitt als ein U-förmiger Abschnitt der Rastspange ausgebildet sein, der sich zum Teil radial nach außen erstreckt und einen abgewinkelten Teil aufweist. Dabei ermöglicht der abgewinkelte Teil des U-förmigen Abschnitts eine einfache Ausbildung des Torsionsbereiches, wobei die als Torsionsstäbe ausgebildeten Schenkel des abgewinkelten Teils durch den sich radial nach außen erstreckenden Teil des U-förmigen Abschnitts mit den zwei Klemmabschnitten der Rastsspange verbunden sind. Je nach Form und Steifigkeit des sich radial nach außen erstreckenden Teils des U-förmigen Abschnitts sowie des die beiden Schenkel des abgewinkelten Teils verbindenden Stegs ist der Biegebereich des Federabschnitts auf diese Elemente aufgeteilt. Der abgewinkelte Teil des U-förmigen Abschnitts der Rastspange erstreckt sich im Wesentlichen parallel oder in einem kleinen Winkel zur Kolbenachse außerhalb der Gehäusewand. Zur Ausbildung eines Torsionsbereichs für eine erfindungsgemäße Spannvorrichtung reicht es wenn der abgewinkelte Teil in irgendeinem Winkel zu dem sich radial nach außen erstreckenden Teil des U-förmigen Abschnitts angeordnet ist. Da sich jedoch die biegeelastischen Eigenschaften des U-förmigen Abschnitts mit steigendem Winkel zwischen dem sich radial nach außen erstreckenden Teil und dem abgewinkelten Teil von einer Biegebeanspruchung hin zu einer Torsionsbeanspruchung verschieben, beträgt die Neigung des abgewinkelten Teils bevorzugt zwischen 75° und 90°, wobei bei einem Winkel von 90° der Torsionsfederweg des Torsionsbereichs am größten ist.

In einer weiteren Ausgestaltung der erfindungsgemäßen Spannvorrichtung weist das Gehäuse einen von der Gehäusewandung vorstehenden Führungsvorsprung auf, der den abgewinkelten Teil des U-förmigen Abschnitts der Rastspange im Arbeitsbereich des Spannkolbens axial führt und gegen ein Verdrehen sichert. So kann der Spannkolben in seinem Arbeitsbereich axial und radial geführt werden. Dabei erstreckt sich der abgewinkelte Teil des U-förmigen Abschnitts, der seitlich in einem gleichbleibenden oder sich ändernden Abstand zur Außenhülle des Gehäuses angeordnet ist, bei einer Bewegung des Spannkolbens im Arbeitsbereich der Spannvorrichtung in diesem Abstand parallel zur Außenhülle in Längsrichtung des Spannkolbens. Dabei ist es unerheblich, ob der tatsächliche Abstand des abgewinkelten Teils zur Gehäusewandung über dem abgewinkelten Bereich gleich ist. Die Klemmung des ringförmigen Teils der Rastspange mit den zwei bogenförmigen Klemmabschnitten auf der zugehörigen Rastprofilierung des Kolbens ermöglicht so auch die Führung des Spannkolbens durch die Rastspange. Dieser einfache Aufbau ermöglicht neben einer verbesserten elastischen Biegung und Aufweitung der Klemmabschnitte auch eine Reduzierung der Bauteile durch Vermeidung oder integrale Ausbildung von Komponenten und eine einfache Montage der Spannvorrichtung.

Eine bevorzugte zumindest teilweise Anordnung des Führungsvorsprungs zwischen den parallelen Schenkeln des abgewinkelten Teils des U-förmigen Abschnitts der Rastspange ermöglicht neben der guten axialen Führung der Rastspange und des Spannkolbens auch eine gute Sicherung gegen ein radiales Verdrehen bei nur sehr kleinen zulässigen Verdrehwinkeln. Die axiale Führung und Verdrehsicherung der Rastspange und des Spannkolbens erlaubt es die notwendigen Fensterausschnitte im Arbeitsbereich des Spannkolbens unabhängig von den sich radial nach außen erstreckenden Abschnitten der Rastspange zu dimensionieren.

Eine vorteilhafte Ausgestaltung sieht vor, dass der Führungsvorsprung an seinem rückwärtigen Ende, dem der Spannrichtung des Kolbens entgegengesetzten Ende, ein Anschlag ausbildet, der die axiale Bewegung der Rastspange in der Ausrückrichtung begrenzt, indem der die Schenkel des abgewinkelten Teils verbindende Steg gegen diesen Anschlag stößt. Die integrale Ausbildung eines Anschlags am rückwärtigen Ende des Führungsvorsprungs erlaubt durch Synergieeffekte die Einsparung von Bauteilen, z.B. dem Anschlagring, bei einer weiterhin unverändert hinterschneidungsfreien spritzgießtechnischen Herstellung des Gehäuses. Weiter kann der Führungsvorsprung an seinem spannseitigen Ende abgeschrägt sein, um beim Zusammenbau der Spannvorrichtung eine einfache Montage der Rastspange, beispielsweise durch Aufklipsen, zu ermöglichen. Bevorzugt kann das in Spannrichtung des Kolbens liegende Ende das Niveau der übrigen Gehäusewandung erreichen.

Für eine kostengünstige und stabile Ausführung der Rastspange kann diese aus einem Runddraht hergestellt sein. Neben dem relativ kostengünstigen Materialpreis für Runddraht lässt sich dieser einfach bearbeiten und erreicht eine gute Formstabilität bei hohen Festigkeitseigenschaften. Der Runddraht ermöglicht weiter eine einfache Ausgestaltung des Torsionsbereichs als Torsionsstab mit gleichmäßigen sicher bestimmbaren Torsionseigenschaften. Zweckmäßigerweise sind die Klemmabschnitte der Rastspange, die entsprechend der Form des Spannkolbens ausgebildet sind und an diesem zumindest bereichsweise eng anliegen, als zwei sich gegenüber liegende bogenförmige Abschnitte ausgebildet, die jeweils in Verlängerung der parallelen Schenkel des U-förmigen Teils angeordnet sind. Dadurch wird ein sehr einfacher Aufbau der Rastspange mit einer hohen Funktionalität erreicht.

Eine zweckmäßige Ausführungsform sieht vor, dass die Rastprofilierung am Spannkolben als Rillenprofil mit mehreren Rastrillen, bevorzugt mit umlaufenden Rastrillen, ausgebildet ist. Die übereinander am Spannkolben angeordneten Rastrillen ermöglichen einen einfachen wirkungsvollen Aufbau des Rastprofils. Für eine feine Abstufung der Nachstellung des Arbeitsbereichs des Spannkolbens kann der Abstand der Rastrillen am Spannkolben kleiner als der doppelte Durchmesser der Rastrillen sein. Hierbei sind die Rastrillen bevorzugt kreisabschnittsförmig ausgebildet.

Eine weitere erfindungsgemäße Ausbildung sieht vor, dass die Rastspange einen zweiten U-förmigen Abschnitt mit einem abgewinkelten Teil aufweist, wobei die beiden U-förmigen Abschnitte an gegenüberliegenden Seiten des ringförmigen Klemmbereichs angeordnet sind, und zwei von der Gehäusewandung vorstehende Führungsvorsprünge vorgesehen sind, die die abgewinkelten Teile der U-förmigen Abschnitte im Arbeitsbereich des Spannkolbens axial führen und die Rastspange gegen ein Verdrehen sichern. Die gegenüberliegende Anordnung der zwei U-förmigen Abschnitte mit jeweils einen abgewinkelten Teil ermöglicht neben einer guten axialen Führung und radialen Verdrehsicherung auch eine gleichmäßige Verteilung der axialen Belastung. Die Vermeidung einer einseitigen Belastung reduziert gleichzeitig das Risiko eines örtlichen Verschleißes sowie die Gefahr eines Verkantens des Spannkolbens.

Eine besondere Ausgestaltung sieht vor, dass die Führungsvorsprünge an ihren rückwärtigen Enden Anschläge ausbilden, die die axiale Bewegung der Rastspange in der Ausrückbewegung begrenzen, indem die Stege der U-förmigen Abschnitte daran ansto-βen. Durch die Ausbildung von (vorderen) Anschlägen an den rückwärtigen Enden der Führungsvorsprünge kann auf zusätzliche Anschläge zur Begrenzung der Ausrückbewegung verzichtet werden. Insbesondere kann durch einen Verzicht von vorderen Anschlägen jenseits der unteren Anschlagfläche am Gehäuse in der Spannrichtung des Spannkolbens eine besonders einfache Ausgestaltung des Gehäuses ohne weitere spannseitige Gehäuseelemente erreicht werden.

In einer einfachen Ausführungsform weist die Rastspange an der dem U-förmigen Abschnitt gegenüberliegenden Seite des ringförmigen Abschnitts einen offenen Abschnitt auf mit zwei radial nach außen vorstehenden Endschenkeln, um ein einfaches Aufspreizen des ringförmigen Abschnitts der Rastspange beim Nachstellen des Arbeitsbereichs des Spannkolbens zu erlauben. Bei einer Ausführungsform der Rastspange mit zwei U-förmigen Abschnitten ist einer der U-förmigen Abschnitte mit einem Durchbruch oder mit zwei überlappenden Enden versehen, bevorzugt im Steg-Bereich des U-förmigen Abschnitts, der bei dieser Ausführungsform das Auseinanderspreizen der zwei Klemmabschnitte des ringförmigen Klemmbereichs durch die Biegung und Torsion im Federabschnitt ermöglicht.

Der untere Anschlag der Nachstelleinrichtung zur Begrenzung der Einrückbewegung des Spannkolbens in die Kolbenbohrung des Gehäuses wird bevorzugt durch die spannseitige Stirnseite des Gehäuses ausgebildet, wobei zur festen Klemmung des ringförmigen Bereichs bzw. der Klemmabschnitte der Rastspange auf der Rastprofilierung des Spannkolbens die innenliegende Stirnseite angefast ist, um die bogenförmigen Klemmabschnitte des kreisförmigen oder der Form des Spannkolbenquerschnitts angepassten Klemmbereichs zumindest teilweise aufzunehmen.

Im Folgenden werden Ausführungsbeispiele der vorliegenden Erfindung anhand einer Zeichnung näher erläutert. Es zeigen:
- Fig. 1: eine perspektivische Ansicht einer erfindungsgemäßen Spannvorrichtung mit einer Nachspanneinrichtung;
- Fig. 2a: eine Schnittansicht mit einem Längsschnitt der Spannvorrichtung aus Fig. 1;
- Fig. 2b: eine Schnittansicht mit einem gegenüber der Fig. 2a um 90° versetzten Längsschnitt der Spannvorrichtung aus Fig. 1;
- Fig. 3: eine perspektivische Ansicht der Rastspange der Spannvorrichtung aus Fig. 1;
- Fig. 4: eine perspektivische Ansicht einer zweiten Ausführungsform einer erfindungsgemäßen Spannvorrichtung mit Nachstelleinrichtung;
- Fig. 5: eine perspektivische Draufsicht auf einen Teil der Spannvorrichtung aus Fig. 4;
- Fig. 6a: eine perspektivische Ansicht der Spannvorrichtung aus Fig. 4 mit der Nachstelleinrichtung in einem ausgefahrenen Zustand;
- Fig. 6b: eine perspektivische Ansicht der Spannvorrichtung aus Fig. 4 mit der Nachstelleinrichtung in einem eingefahrenen Zustand;
- Fig. 7: eine Seitenansicht einer dritten Ausführungsform einer erfindungsgemäßen Spannvorrichtung mit Nachstelleinrichtung; und
- Fig. 8: eine Draufsicht auf die Spannvorrichtung aus Fig. 7.

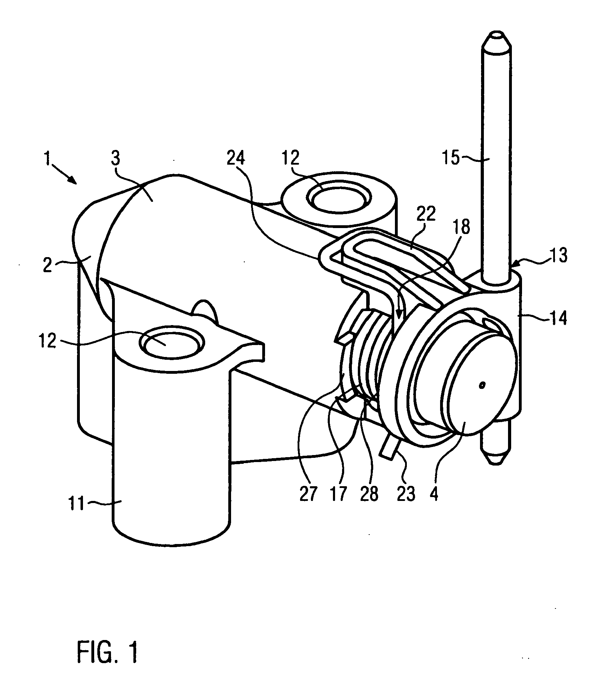

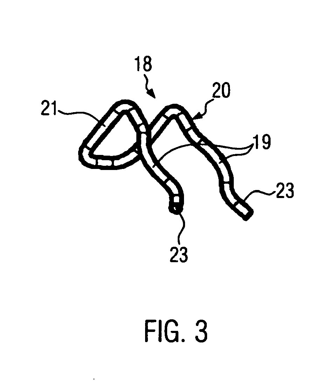

Anhand der Figuren 1 bis 3 wird nunmehr die erste Ausführungsform einer erfindungsgemäßen Spannvorrichtung 1 für ein flexibles Antriebsmittel näher erläutert. Die Spannvorrichtung 1 umfasst ein Gehäuse 2 mit einem hohlzylindrischen Gehäusekörper 3, in dem ein ebenfalls hohlzylindrischer Spannkolben 4 längsbeweglich geführt ist. Der hohlzylindrische Körper 3 und der Spannkolben 4 bilden gemeinsam einen Druckraum 5 aus, der über ein Rückschlagventil 6 mit einer Hydraulikleitung 7 verbunden ist. Dabei ist im oberen Teil des hohlzylindrischen Spannkolbens 4 ein Füllkörper 8 vorgesehen, der das Volumen des Druckraums 5 begrenzt. Der Spannkolben 4 ist mit einer schraubenförmigen Druckfeder 9 in axialer Richtung vorgespannt und drückt in Richtung der Achse des Spannkolbens 4 gegen ein nicht dargestelltes flexibles Antriebsmittel, insbesondere eine Antriebskette des Verbrennungsmotors. Zur Entlüftung des Druckraums 5 und Bereitstellen eines Leckagestroms des Hydraulikmittels ist an der Stirnseite des Spannkolbens 4 eine Entlüftungsbohrung 10 vorgesehen. Dabei drückt die Druckfeder 9 den pilzförmigen Kopf des zumeist aus Kunststoff bestehenden Füllkörpers 8 auf die im Druckraum 5 in der Stirnseite des hohlzylindrischen Spannkolbens 4 vorgesehene Öffnung der Entlüftungsbohrung 10, so dass lediglich ein dosiertes Entweichen des Hydraulikmittels aus dem Druckraum 5 über die Entlüftungsbohrung 10 erfolgen kann.

Das Gehäuse 2 der erfindungsgemäßen Spannvorrichtung 1 ist als Flanschgehäuse ausgeführt mit seitlichen Montageflanschen 11 und Bolzenlöchern 12 zur Befestigung der Spannvorrichtung 1 an einem Motorblock. Darüber hinaus ist auch eine Ausgestaltung des Gehäuses 2 als Einschraubgehäuse möglich, wobei dann der zylindrische Gehäusekörper 3 mit einem Außengewinde versehen ist.

An dem in Spannrichtung vorderen Ende des Gehäuses 2 ist weiter eine Transportsicherung 13 vorgesehen, bestehend aus einer vom Gehäuse 2 ausgebildeten Sicherungshülse 14 und einem entfernbaren Sicherungsbolzen 15, der zur Fixierung des Spannkolbens 4 in der Transportstellung mit einem Sicherungsvorsprung 16 am Spannkolben 4 zusammenwirkt und dabei den Spannkolben 4 in einer vollständig eingeschobenen Stellung im Gehäuse 2 fixiert hält. Dabei ist der in der Sicherungshülse 14 geführte und gehaltene Sicherungsbolzen 15 oberhalb des Sicherungsvorsprungs 16 so gegenüber dem Spannkolben 4 angeordnet, dass der Sicherungsbolzen 15 sich mit dem Sicherungsvorsprung 16 überdeckt und ein Ausrücken des Spannkolbens 4 aus dem Gehäusekörper 3 verhindert.

Als Rastprofilierung der Nachstelleinrichtung sind am Spannkolben 4 mehrere im Querschnitt kreisabschnittsförmige Ringnuten 17 übereinander an dem in Spannrichtung vorderen Ende des Spannkolbens 4 ausgebildet, beginnend direkt unterhalb des Sicherungsvorsprungs 16. Eine Rastspange 18 greift in diese Rastnuten 17 am Spannkolben 4 ein, wobei die bogenförmigen Klemmabschnitte 19 des Klemmbereichs der Rastspange 18 mit ihren zwei kreisabschnittsförmigen Schenkeln in den Ringnuten 17 am Spannkolben 4 positioniert sind und den Spannkolben 4 durch die Vorspannkraft der Rastspange 18 festhalten. Die Rastspange 18 weist angrenzend an die bogenförmigen Abschnitte 19 des Klemmbereichs einen U-förmigen Abschnitt 20 auf, der sich zunächst ausgehend von dem in den Ringnuten 17 des Spannkolbens 4 positionierten bogenförmigen Abschnitten 19 radial nach außen erstreckt und in einem abgewinkelten Teil 21 mündet, dessen zwei Schenkel sich im Wesentlichen parallel zur Gehäusewandung des hohlzylindrischen Gehäusekörpers 3 erstrecken und von einem von der Gehäusewandung des Gehäusekörpers 3 vorstehenden Führungsvorsprung 22 axial geführt werden. Dabei sind die in Verlängerung der kreisabschnittsförmigen Schenkel des ringförmigen Klemmbereichs 19 verlaufenden parallelen Schenkel des U-förmigen Abschnitts im abgewinkelten Teil 21 jeweils auf einer Seite des Führungsvorsprungs 22 angeordnet, so dass der abgewinkelte Teil 21 des U-förmigen Abschnitts 20 den Führungsvorsprung 22 an drei Seiten umgibt. An den dem U-förmigen Abschnitt 20 gegenüberliegenden Seiten der bogenförmigen Abschnitte 19 ist an den beiden kreisabschnittsförmigen Schenkeln jeweils ein sich radial nach außen vorstehender Endschenkel 22 vorgesehen, die sich nicht überschneiden und gegenüber dem ringförmigen Klemmbereich eine Öffnung der Rastspange 18 bereitstellen. Der Führungsvorsprung 23 ist in dieser Ausführungsform als U-förmiger Steg ausgebildet, der an seinem stirnseitigen, offenen Ende abgeflacht ist, während er an dem in Spannungsrichtung gegenüberliegenden Ende einen Anschlag 24 für die Rastspange 18 ausbildet.

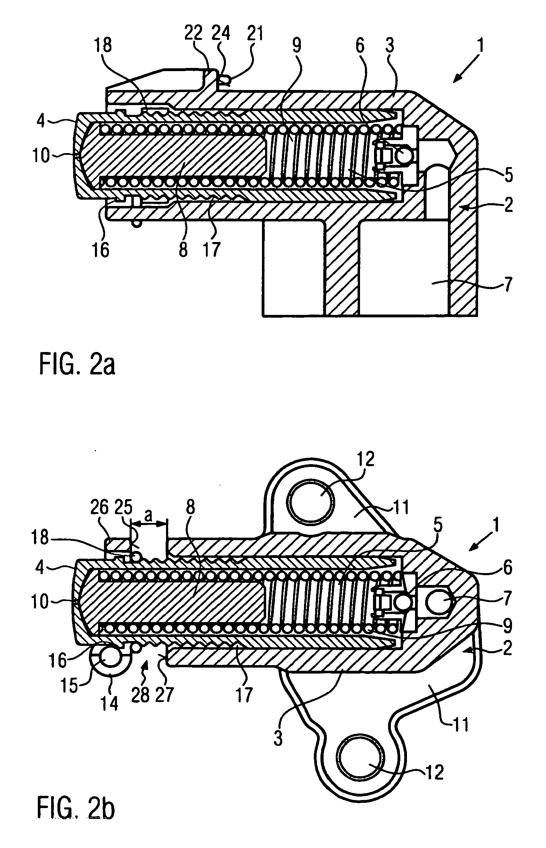

In den Figuren 1 und 2 ist die erfindungsgemäße Spannvorrichtung 1 in einer Transportsicherungsstellung dargestellt. In dieser Stellung ist die Ausrückbewegung des Spannkolbens 4 durch den Sicherungsbolzen 15 blockiert, da der Sicherungsbolzen 15 in der Sicherungshülse 14 sich mit dem Sicherungsvorsprung 16 am Spannkolben 4 überdeckt. Die Transportsicherung 13 wird durch das Entfernen des Sicherungsbolzen 15 deaktiviert, wobei die Spannvorrichtung 1 in eine Betriebsstellung versetzt wird indem der Spannkolben 4 aus dem Gehäusekörper 3 ausrückt bis er in einer Spannposition ist.

In der Betriebsstellung kann der Spannkolben 4 frei so weit aus dem hohlzylindrischen Gehäusekörper 3 ausfahren, bis die Rastspange 18 an einer vorderen Anschlagfläche 25 anschlägt die durch einen stirnseitigen Gehäusering 26 ausgebildet ist. Der stirnseitige Gehäusering 26 ist durch zwei Stege mit dem restlichen Gehäusekörper 3 verbunden, wobei der Führungsvorsprung 22 teilweise auf einem der Stege ausgebildet ist. Zwischen dem stirnseitigen Gehäusering 26 und den Stegen sowie dem vom Gehäusekörper 3 ausgebildeten hinteren Anschlag 27 sind Gehäusefenster 28 vorgesehen, in denen sich die bogenförmigen Abschnitte 19, der radiale Teil des U-förmigen Abschnitts 20 sowie die Endschenkel 23 der Rastspange 18 im dynamischen Betriebsbereich der Spannvorrichtung 1 frei bewegen. Die Gehäusefenster 28 definieren damit den gedämpften freien Arbeitsweg a des Spannkolbens 4. Der Spannkolben 4 bewegt sich in diesem freien Arbeitsweg a bis die Rastspange 18 bei einer Ausrückbewegung des Spannkolbens 4 gegen den vorderen Anschlag 25 schlägt, bzw. bis der U-förmige Abschnitt 20 der Rastspange 18 in seinem abgewinkelten Teil 21 gegen den Anschlag 24 des Führungsvorsprungs 22 stößt. Bei einer anhaltenden Ausrückbewegung des Spannkolbens 4, bedingt durch einen Verschleiß von Antriebskomponenten bzw. einer Längung des Antriebsmittels, werden die bogenförmigen Klemmabschnitte 19 der Rastspange 18 durch die ansteigenden Flanken der kreisabschnittsförmigen Ringnuten 17 auf dem Spannkolben 4 gegen die Vorspannung des Federabschnitts auseinander gespreizt, so dass der Spannkolben 4 durch die Rastspange 18 hindurch rutschen kann und die Rastspange 18 in der nächsten Ringnut 17 wieder einrastet. Dabei ermöglicht der durch den U-förmigen Abschnitt 20 definierte elastische Federabschnitt der Rastspange 18 die reversible radiale Bewegung der bogenförmigen Klemmabschnitte 19. Ein wesentlicher Teil der zwischen den bogenförmigen Klemmabschnitten 19 auftretenden Biegung wird dabei durch die Torsion der abgewinkelten Schenkel 21 des U-förmigen Abschnitts 20 bereitgestellt. Dadurch wird der eigentliche Biegeanteil im Biegebereich des U-förmigen Abschnitts 20 gering gehalten und eine plastische Verformung verhindert.

Bei einer starken Einrückbewegung des Spannkolbens 4 in den hohlzylindrischen Gehäusekörper 3, beispielsweise bei einem nicht ausreichenden Hydraulikdruck im Druckraum 5 stößt die Rastspange 18 gegen den im spannseitigen Ende des unterbrochenen Gehäusekörpers 3 vorgesehenen hinteren Anschlag 27. Der hintere Anschlag 27 ist mit einer innenliegenden Fase 29 versehen, in die sich der ringförmige Abschnitt 19 der Rastspange 18 einlegt, so dass bei einer weiteren Einfahrbewegung des Spannkolbens 4 in den hohlzylindrischen Körper 3 die kreisabschnittsförmigen Schenkel des ringförmigen Klemmbereich in die Ringnut 17 des Spannkolbens 4 gepresst werden und ein weiteres Einfahren des Spannkolbens 4 in das Gehäuse 2 sicher blockiert wird.

In dem durch den freien Arbeitsweg a definierten dynamischen Betriebsbereich der Spannvorrichtung 1 wird die Rastspange 18 und mit ihr der durch die bogenförmigen Klemmabschnitte 19 der Rastspange 18 fixierte Spannkolben 4 durch die Führung des abgewinkelten Teils 21 des U-förmigen Abschnitts 20 der Rastspange 18 am Führungsvorsprung 22 axial geführt und gegen ein Verdrehen gesichert. Durch die Vermeidung der unkontrollierten Einrückbewegung des Spannkolbens 4 mittels des Festlegens der Rastspange 18 am hinteren Anschlag 27 wird das Durchschlagen von auftretenden Kraftspitzen verhindert, beispielsweise beim Startvorgang eines Verbrennungsmotors. So wird auch ein Überspringen des Antriebsmittels auf den Antriebsrädern sicher vermieden, insbesondere wenn der Druckraum 5 der Spannvorrichtung 1 noch nicht vollständig mit einem Hydraulikmittel gefüllt wurde.

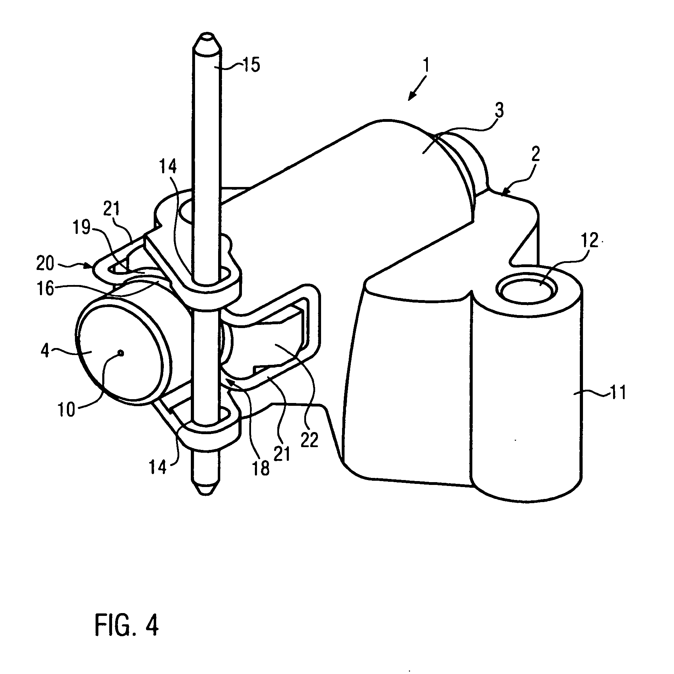

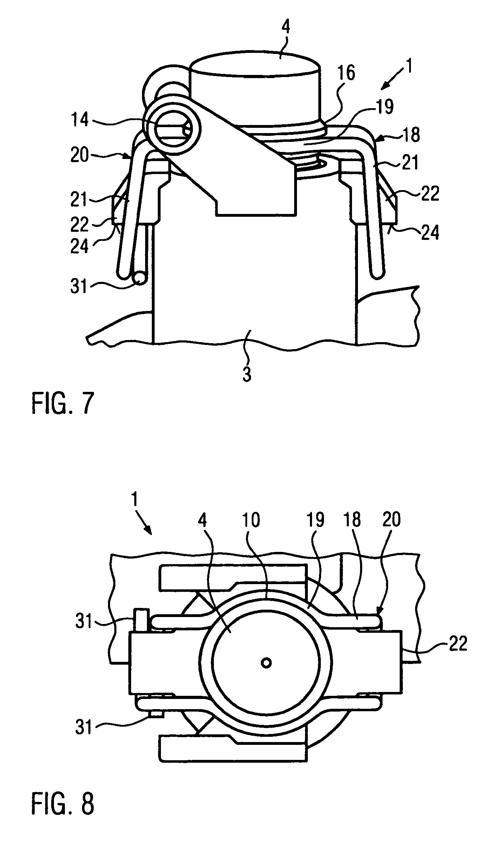

Im Folgenden werden anhand der Figuren 4 bis 6 sowie 7 und 8 zwei weitere Ausführungsformen der vorliegenden Erfindung näher erläutert. Dabei wird jeweils nur auf die wesentlichen Unterschiede zu den vorangegangenen Ausführungsbeispielen eingegangen. Deshalb wird unter Zuhilfenahme gleicher Bezugszeichen für baugleiche und wirkungsgleiche Bauelemente auf die obige Beschreibung bzw. die nachfolgende Beschreibung der zweiten Ausführungsform verwiesen.

Die zweite Ausführungsform einer erfindungsgemäßen Spannvorrichtung 1 zeigt eine Rastspange 18 mit zwei U-förmigen Abschnitten 20, die jeweils einen abgewinkelten Teil 21 aufweisen und an gegenüberliegenden Seiten der bogenförmigen Klemmabschnitte 19 angeordnet sind. Die abgewinkelten Teile 21 erstrecken sich wiederum im Wesentlichen parallel zur Gehäusewandung des Gehäusekörpers 3, d.h. parallel zur Achse des Spannkolbens 4. Am hohlzylindrischen Gehäusekörper 3 stehen hierbei zwei Führungsvorsprünge 22 vor, die die abgewinkelten Teile 21 der zwei U-förmigen Abschnitte 20 im Arbeitsweg a des Spannkolbens 4 axial führen und die Rastspange 18 sowie den durch den ringförmigen Klemmbereich der Rastspange 18 fixierten Spannkolben 4 gegen ein Verdrehen sichern. Der Sicherungsbolzen 15 der Transportsicherung 13 wird in dieser Ausführungsform durch zwei seitlich des Spannkolbens 4 positionierte Sicherungshülsen 14 gehalten und wirkt in gleicher Weise mit dem Sicherungsvorsprung 16 am Spannkolben 4 zusammen, um den Spannkolben 4 in einer vollständig eingefahrenen Stellung im Gehäuse 2 zu halten.

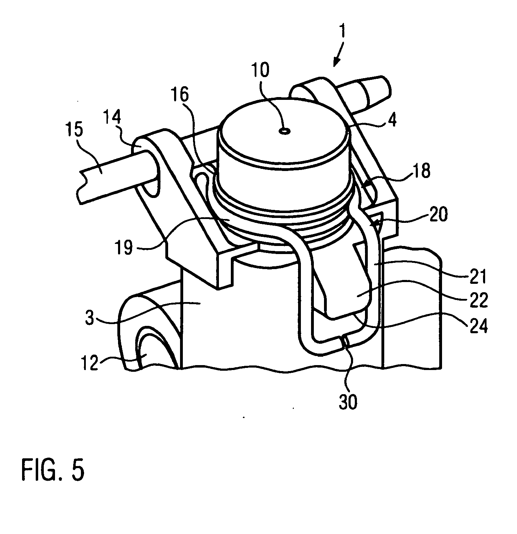

Wie in der Draufsicht in Fig. 5 gut zu erkennen, weist ein U-förmiger Schenkel 20 der Rastspange 18 am unteren Ende des abgewinkelten Teils 21 einen Spalt 30 auf, um bei einer fortgesetzten Ausrückbewegung des Spannkolbens 4 ein Aufspreizen des ringförmigen Klemmbereich bzw. der bogenförmigen Abschnitte 19 der Rastspange 18 zu ermöglichen.

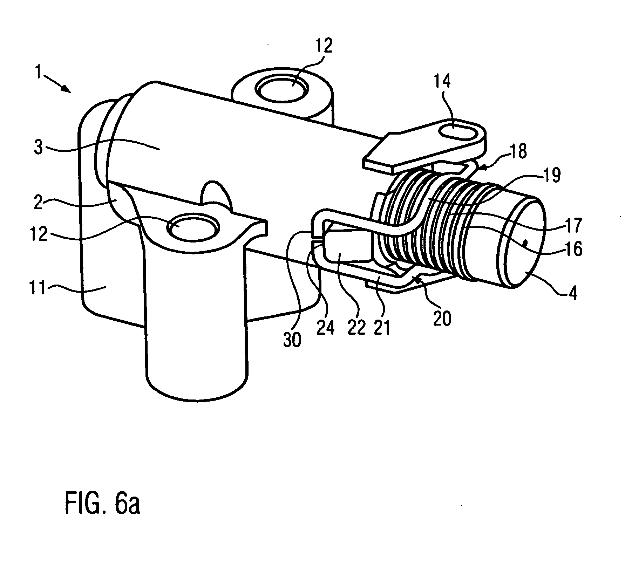

Fig. 6a zeigt die zweite Ausführungsform einer erfindungsgemäßen Spannvorrichtung 1 in einem Betriebszustand, d.h. bei dem der Sicherungsbolzen 15 aus den Sicherungshülsen 14 entfernt ist und der Spannkolben 4 in eine Betriebsstellung vorgerückt ist. Bei dem hier dargestellten ausgerückten Zustand des Spannkolbens 4 stoßen die unteren Enden der U-förmigen Abschnitte 20 der Rastspange 18 in ihren abgewinkelten Teilen 21 gegen die Anschläge 24 der beiden Führungsvorsprünge 22 an. Bei einer fortgesetzten Ausrückbewegung des Spannkolbens 4 werden die bogenförmigen Abschnitte 19 der Rastspange 18 durch die ansteigende Flanke der kreisabschnittsförmigen Ringnuten 17 auf dem Spannkolben 4 auseinander gespreizt, wobei sich der Spalt 30 an dem unteren Ende des einen U-förmigen Abschnitts 20 der Rastspange 18 aufweitet, um ein Aufspreizen des ringförmigen Abschnitts 19 zu ermöglichen, ohne dass die Aufweitung des Spalts 30 das Anliegen der Rastspange 18 an dem Anschlag 24 des Führungsvorsprungs 22 verhindert. Die Aufspreizung des ringförmigen Klemmbereichs der Rastspange 18 durch die elastische Biegung im Biegebereich und Tensionsbereich des Federabschnitts erlaubt das Hindurchrutschen des Spannkolbens 4 durch die Rastspange 18 in die nächste Ringnut 17 und damit ein Nachstellen des Betriebsbereichs der Spannvorrichtung 1 zur Nutzung des gesamten freien Arbeitswegs a des Spannkolbens 4 für die Spann- und Dämpfungsfunktion der Spannvorrichtung 1. Dabei wird in der zweiten Ausführungsform der freie Arbeitsweg a durch die Bewegung der Rastspange 18 zwischen den Anschlägen 24 an den Führungsvorsprüngen 22 und dem hinteren Anschlag 27 am stirnseitigen Ende des hohlzylindrischen Gehäusekörpers 3 definiert.

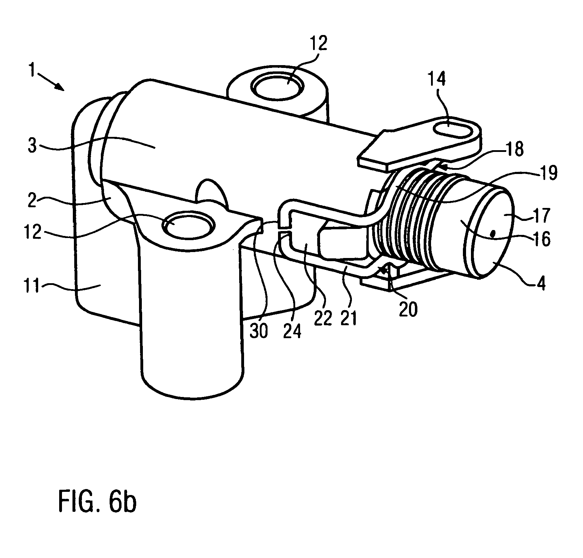

Demgegenüber zeigt Fig. 6b den Spannkolben 4 der zweiten Ausführungsform einer erfindungsgemäßen Spannvorrichtung 1 in einem vollständig eingerückten Zustand, bei dem die bogenförmigen Abschnitte 19 der Rastspange 18 am hinteren Anschlag 27 des spannseitigen Endes des hohlzylindrischen Gehäusekörpers 3 anliegen. Auch hier ist der hintere Anschlag 27 wieder mit einer innen liegenden Fase 29 versehen, in die sich die im Querschnitt kreisförmigen Klemmabschnitte 19 einklemmen, so dass bei einer weiteren Einfahrbewegung des Spannkolbens 4 in den hohlzylindrischen Gehäusekörper 3 die kreisabschnittsförmigen Schenkel der bogenförmigen Klemmabschnitte 19 in die entsprechende Ringnut 17 des Spannkolbens 4 gedrückt werden und ein weiteres Einfahren des Spannkolbens 4 in das Gehäuse 1 sicher blockieren.

Die dritte Ausführungsform der erfindungsgemäßen Spannvorrichtung 1 zeigt wieder eine Rastspange 18 mit zwei U-förmigen Abschnitten 20, die jeweils einen abgewinkelten Teil 21 aufweisen und an den gegenüberliegenden Seiten des ringförmigen Klemmbereichs der Rastspange 18 angeordnet sind. Die abgewinkelten Teile 21 erstrecken sich hier leicht geneigt zur Gehäusewandung des Gehäusekörpers 3, d.h. in einem unterschiedlichen Abstand zum Gehäusekörper 3. Dabei beträgt der Winkel zwischen dem sich radial nach außen erstreckenden Teil des U-förmigen Abschnitts 20 und seinem abgewinkelten Teil 21 etwa 80° bis 90°. Da sich die unteren Enden der U-förmigen Abschnitte 20 der Rastspange 18 durch die geringere Neigung abgewinkelten Teile 21 in einem größeren Abstand zur Gehäusewandung des Gehäusekörpers 3 befinden, stehen die Führungsvorsprünge 22 weiter gegenüber der Gehäusewandung vor, um einen ausreichenden Anschlag 24 auszubilden.

Zur Aufspreizung der bogenförmigen Klemmabschnitte 19 der Rastspange 18 beim Anschlag der unteren Enden der U-förmigen Abschnitte 20 an den Anschlägen 24 weist ein U-förmiger Schenkel 20 der Rastspange 18 an seinem unteren Ende des abgewinkelten Teils 21 zwei sich überlappende freie Enden 31 auf, die bei einer fortgesetzten Ausrückbewegung des Spannkolbens 4 durch eine Relativbewegung zueinander ein Aufspreizen des ringförmigen Klemmbereichs der Rastspange 18 ermöglichen. Bedingt durch die Überlappung der freien Enden 31 ist die Neigung der einzelnen Schenkel des zugehörigen abgewinkelten Teils 21 unterschiedlich, da die freien Enden 31 für einen sicheren Anschlag der Rastspange 18 an den Anschlägen 24 und ein gleichmäßiges Auseinanderspreizen der bogenförmigen Klemmabschnitte 19 der Rastspange 18 gleichzeitig an dem Anschlag 24 des Führungsvorsprungs 22 anschlagen.

## Patentansprüche

1. Spannvorrichtung (1) für ein flexibles Antriebsmittel, insbesondere eine Antriebskette eines Verbrennungsmotors, mit einem Gehäuse (2), einem im Gehäuse (2) verschiebbar geführten Spannkolben (4) und einer Nachstelleinrichtung zum schrittweisen Nachstellen des Arbeitsbereichs des Spannkolbens (4), die Nachstelleinrichtung weist eine Rastspange (18) und eine zugehörige Rastprofilierung am Spannkolben (4) auf, wobei die Rastspange (18) zwei Klemmabschnitte (19) zum Eingriff in die Rastprofilierung am Spannkolben (4) und einen die Klemmabschnitte (19) verbindenden Federabschnitt aufweist,
**dadurch gekennzeichnet, dass** der Federabschnitt mindestens einen als Torsionsstab ausgebildeten Torsionsbereich aufweist, der die Klemmabschnitte (19) federelastisch verbindet, wobei die Achse des Torsionsstabs in einem Winkel zu der Ebene des seitlichen Auseinanderbewegens der Klemmabschnitte (19) angeordnet ist, und beim seitlichen Auseinanderbewegen der Klemmabschnitte (19) in der Ebene einen Torsionsfederweg ausführt.

2. Spannvorrichtung (1) nach Anspruch 1,
**dadurch gekennzeichnet, dass** der Federabschnitt weiter mindestens einen Biegebereich aufweist und der Federabschnitt die Klemmabschnitte (19) derart federelastisch verbindet, dass beim seitlichen Auseinanderbewegen der Klemmabschnitte (19) in einer Ebene der Torsionsbereich einen Torsionsfederweg und der Biegebereich einen Biegefederweg ausführt.

3. Spannvorrichtung (1) nach Anspruch 2,
**dadurch gekennzeichnet, dass** beim seitlichen Auseinanderbewegen der Klemmabschnitte (19) in einer Ebene der Torsionsfederweg sich stärker auf die federelastische Bewegung der Klemmabschnitte (19) auswirkt als der Biegfederweg.

4. Spannvorrichtung (1) nach einem der Ansprüche 1 bis 4,
**dadurch gekennzeichnet, dass** die Achse des Torsionsstabs in einem Winkel zwischen 45° und 90°, bevorzugt zwischen 75° und 90°, zu der Ebene des seitlichen Auseinanderbewegens der Klemmabschnitte (18) angeordnet ist.

5. Spannvorrichtung (1) nach einem der Ansprüche 1 bis 4,
**dadurch gekennzeichnet, dass** der Federabschnitt mindestens zwei Torsionsbereiche aufweist.

6. Spannvorrichtung (1) nach einem der Ansprüche 1 bis 5,
**dadurch gekennzeichnet, dass** der Federabschnitt als ein U-förmiger Abschnitt (20) der Rastspange (18) ausgebildet ist, der sich zum Teil radial nach außen erstreckt und einen abgewinkelten Teil (21) aufweist.

7. Spannvorrichtung (1) nach Anspruch 6,
**dadurch gekennzeichnet, dass** das Gehäuse (2) einen von der Gehäusewandung vorstehenden Führungsvorsprung (22) aufweist, der den abgewinkelten Teil (21) des U-förmigen Abschnitts (20) der Rastspange (18) im Arbeitsbereich des Spannkolbens (4) axial führt und gegen ein Verdrehen sichert.

8. Spannvorrichtung (1) nach Anspruch 7,
**dadurch gekennzeichnet, dass** der Führungsvorsprung (22) zumindest teilweise zwischen den parallelen Schenkeln des abgewinkelten Teils (21) des U-förmigen Abschnitts (20) der Rastspange (18) angeordnet ist.

9. Spannvorrichtung (1) nach Anspruch 7 oder 8,
**dadurch gekennzeichnet, dass** der Führungsvorsprung (22) an seinem rückwärtigen Ende ein Anschlag (24) ausbildet, der die axiale Bewegung der Rastspange (18) in der Ausrückrichtung begrenzt.

10. Spannvorrichtung (1) nach einem der Ansprüche 6 bis 9,
**dadurch gekennzeichnet, dass** die Klemmabschnitte (19) der Rastspange (18) als zwei sich gegenüberliegende bogenförmige Abschnitte ausgebildet sind, die jeweils in Verlängerung der parallelen Schenkel des U-förmigen Teils (20) angeordnet sind.

11. Spannvorrichtung (1) nach einem der Ansprüche 1 bis 10,
**dadurch gekennzeichnet, dass** die Rastprofilierung am Spannkolben (4) als Rillenprofil mit mehreren Rastrillen (17), bevorzugt mit umlaufenden Rastrillen (17), ausgebildet ist.

12. Spannvorrichtung (1) nach einem der Ansprüche 6 bis 11,
**dadurch gekennzeichnet, dass** die Rastspange (18) einen zweiten U-förmigen Abschnitt (20) mit einem abgewinkelten Teil (21) aufweist, wobei die U-förmigen Abschnitte (20) an gegenüberliegenden Seiten des ringförmigen Abschnitts (19) angeordnet sind und zwei von der Gehäusewandung vorstehende Führungsvorsprünge (22) vorgesehen sind, die die abgewinkelten Teile (21) der U-förmigen Abschnitte (20) im Arbeitsbereich des Spannkolbens (4) axial führen und die Rastspange (18) gegen ein Verdrehen sichern.

13. Spannvorrichtung (1) nach Anspruch 12,
**dadurch gekennzeichnet, dass** die Führungsvorsprünge (22) an ihren rückwärtigen Enden Anschläge (24) ausbilden, die die axiale Bewegung der Rastspange (18) in der Ausrückbewegung begrenzen.

14. Verwendung einer Rastspange (18) für eine Nachstelleinrichtung zum schrittweisen Nachstellen des Arbeitsbereichs eines Spannkolbens (4) einer Spannvorrichtung (1) für ein flexibles Antriebsmittel, insbesondere eine Antriebskette eines Verbrennungsmotors, die Rastspange (18) weist zwei Klemmabschnitte (19) zum Eingriff in die Rastprofilierung des in einem Spannergehäuse (2) verschiebbar geführten Spannkolbens (4) und einen Federabschnitt auf, wobei der Federabschnitt die zum Eingriff in die Rastprofilierung in einer Ebene seitlich zum Spannkolben (4) bewegbar geführten Klemmabschnitte (19) federelastisch miteinander verbindet,
**dadurch gekennzeichnet, dass** der Federabschnitt mindestens einen als Torsionsstab ausgebildeten Torsionsbereich aufweist, der die Klemmabschnitte (19) federelastisch verbindet, wobei die Achse des Torsionsstabs in einem Winkel zu der Ebene des seitlichen Auseinanderbewegens der Klemmabschnitte (19) angeordnet ist, und beim seitlichen Auseinanderbewegen der Klemmabschnitte (19) in der Ebene einen Torsionsfederweg ausführt.

15. Verwendung einer Rastspange (18) nach Anspruch 14,
**dadurch gekennzeichnet, dass** der Federabschnitt beim seitlichen Auseinanderbewegen der Klemmabschnitte (19) in der Ebene des Eingriffs in die Rastprofilierung einen Biegefederweg ausführt, wobei der Torsionsfederweg einen größeren Anteil an der federelastischen Bewegung der Klemmabschnitte aufweist als der Biegefederweg.

## Claims

1. Tensioning device (1) for a flexible drive means, in particular a drive chain of an internal combustion engine, comprising a housing (2), a tensioning piston (4) movably guided in the housing (2) and an adjusting means for gradually adjusting the working area of the tensioning piston (4), which adjusting means comprises a latch clip (18) and a co-operating latch profiling on the tensioning piston (4), and the latch clip (18) has two clamping sections (19) for engaging in the latch profiling on the tensioning piston (4) and a spring portion linking the clamping sections (19),
**characterised in that** the spring portion has at least one torsional region acting as a torsion bar which links the clamping sections (19) in a resiliently elastic arrangement, and the axis of the torsion bar is disposed at an angle to the plane in which the clamping sections (19) are moved laterally apart from one another and travels in the manner of a torsion spring as the clamping sections (19) are moved apart from one another in the plane.

2. Tensioning device (1) as claimed in claim 1,
**characterised in that** the spring portion further comprises at least one bending region and the spring portion links the clamping sections (19) in a resiliently elastic arrangement so that the torsional region travels in the manner of a torsion spring and the bending region travels in the manner of a bending spring as the clamping sections (19) are moved laterally apart from one another in a plane.

3. Tensioning device (1) as claimed in claim 2,
**characterised in that** as the clamping sections (19) are moved laterally apart from one another in a plane, the travel of the torsion spring has a more pronounced effect on the resilient elastic movement of the clamping sections (19) than the travel of the bending spring.

4. Tensioning device (1) as claimed in one of claims 1 to 4,
**characterised in that** the axis of the torsion bar is disposed at an angle of between 45°and 90°, preferably between 75° and 90°, to the plane in which the clamping sections (18) are moved laterally apart from one another.

5. Tensioning device (1) as claimed in one of claims 1 to 4,
**characterised in that** the spring portion has at least two torsional regions.

6. Tensioning device (1) as claimed in one of claims 1 to 5,
**characterised in that** the spring portion is a U-shaped section (20) of the latch clip (18) extending to a certain extent radially outwards and having an angled part (21).

7. Tensioning device (1) as claimed in claim 6,
**characterised in that** the housing (2) has a guide projection (22) projecting out from the housing wall, which axially guides the angled part (21) of the U-shaped section (20) of the latch clip (18) in the working area of the tensioning piston (4) and prevents twisting.

8. Tensioning device (1) as claimed in claim 7,
**characterised in that** the guide projection (22) is disposed at least partially between the parallel legs of the angled part (21) of the U-shaped section (20) of the latch clip (18).

9. Tensioning device (1) as claimed in claim 7 or 8,
**characterised in that** the guide proj ection (22) forms a stop (24) at its rear end which restricts the axial movement of the latch clip (18) in the disengaging direction.

10. Tensioning device (1) as claimed in one of claims 6 to 9,
**characterised in that** the clamping sections (19) of the latch clip (18) are provided in the form of two oppositely lying arcuate sections disposed respectively in the extension of the parallel legs of the U-shaped part (20).

11. Tensioning device (1) as claimed in one of claims 1 to 10,
**characterised in that** the latch profiling on the tensioning piston (4) is provided in the form of a grooved profile with a plurality of latch grooves (17), preferably with circumferentially extending latch grooves (17).

12. Tensioning device (1) as claimed in one of claims 6 to 11,
**characterised in that** the latch clip (18) has a second U-shaped section (20) with an angled part (21), and the U-shaped sections (20) are disposed on oppositely lying sides of the annular section (19), and two guide projections (22) are provided projecting out from the housing wall which axially guide the angled parts (21) of the U-shaped sections (20) in the working area of the tensioning piston (4) and prevent the latch clip (18) from twisting.

13. Tensioning device (1) as claimed in claim 12,
**characterised in that** the guide projections (22) form stops (24) at their rear ends which restrict the axial movement of the latch clip (18) in the disengaging movement.

14. Use of a latch clip (18) for an adjusting means for gradually adjusting the working area of a tensioning piston (4) of a tensioning device (1) for a flexible drive means, in particular a drive chain of an internal combustion engine, which latch clip (18) comprises two clamping sections (19) for engaging in the latch profiling of the tensioning piston (4) movably guided in a tensioner housing (2) and a spring portion, and the spring portion links to one another in a resiliently elastic manner the clamping portions (19) which are guided as they move laterally in a plane towards the tensioning piston (4) in order to engage in the latch profiling,
**characterised in that** the spring portion comprises at least one torsional region acting as a torsion bar which links the clamping sections (19) in a resiliently elastic arrangement, and the axis of the torsion bar is disposed at an angle to the plane in which the clamping sections (19) are moved laterally apart from one another and travels in the manner of a torsion spring as the clamping sections (19) are moved laterally apart from one another in the plane.

15. Use of a latch clip (18) as claimed in claim 14,
**characterised in that**, as the clamping portions (19) are moved laterally apart from one another in the plane of engagement in the latch profiling, the spring portion travels in the manner of a bending spring, and the travel of the torsion spring accounts for a greater proportion of the resiliently elastic movement of the clamping sections than the travel of the bending spring.

## Revendications

1. Dispositif de serrage (1) pour un moyen d'entraînement flexible, en particulier une chaîne d'entraînement d'un moteur à combustion interne, avec un boîtier (2), un piston de serrage (4) apte à coulisser dans le boîtier (2), et un dispositif d'ajustement pour ajuster progressivement la zone de travail du piston de serrage (4), le dispositif d'ajustement comporte une agrafe d'enclenchement (18) et un profil d'enclenchement associé, sur le piston de serrage (4), étant précisé que l'agrafe d'enclenchement (18) comporte deux sections de blocage (19) destinées à venir s'accrocher dans ledit profil du piston de serrage (4), et une section élastique qui relie les sections de blocage (19),
**caractérisé en ce que** la section élastique comporte une zone de torsion conçue comme une barre de torsion qui relie de manière élastique les sections de blocage (19), étant précisé que l'axe de la barre de torsion est disposé suivant un angle par rapport au plan de l'écartement latéral des sections de blocage (19), et décrit une course élastique de torsion lorsque les sections de blocage (19) s'écartent latéralement dans ce plan.

2. Dispositif de serrage (1) selon la revendication 1, **caractérisé en ce que** la section élastique comporte également au moins une zone de flexion et relie de manière élastique les sections de blocage (19) de telle sorte que lorsque lesdites sections de blocage (19) s'écartent dans un plan, la zone de torsion décrit une course élastique de torsion et la zone de flexion décrit une course élastique de flexion.

3. Dispositif de serrage (1) selon la revendication 2, **caractérisé en ce que** lorsque les sections de blocage (19) s'écartent latéralement dans un plan, la course élastique de torsion a sur le mouvement élastique des sections de blocage (19) une action plus prononcée que la course élastique de flexion.

4. Dispositif de serrage (1) selon l'une des revendications 1 à 4, **caractérisé en ce que** l'axe de la barre de torsion est disposé par rapport au plan de l'écartement latéral des sections de blocage (18) suivant un angle situé entre 45° et 90°, de préférence entre 75° et 90°.

5. Dispositif de serrage (1) selon l'une des revendications 1 à 4, **caractérisé en ce que** la section élastique comporte au moins deux zones de torsion.

6. Dispositif de serrage (1) selon l'une des revendications 1 à 5, **caractérisé en ce que** la section élastique est conçue comme une section en U (20) de l'agrafe d'enclenchement (18), qui s'étend en partie radialement vers l'extérieur et comporte une partie coudée (21).

7. Dispositif de serrage (1) selon la revendication 6, **caractérisé en ce que** le boîtier (2) comporte une saillie de guidage (22) qui dépasse de la paroi du boîtier et qui guide axialement la partie coudée (21) de la section en U (20) de l'agrafe d'enclenchement (18) dans la zone de travail du piston de serrage (4) et empêche ladite partie coudée (21) de tourner.

8. Dispositif de serrage (1) selon la revendication 7, **caractérisé en ce que** la saillie de guidage (22) est disposée au moins en partie entre les branches parallèles de la partie coudée (21) de la section en U (20) de l'agrafe d'enclenchement (18).

9. Dispositif de serrage (1) selon la revendication 7 ou 8, **caractérisé en ce que** la saillie de guidage (22) forme à son extrémité arrière une butée (24) qui limite le mouvement axial de l'agrafe d'enclenchement (18) dans le sens de désenclenchement.

10. Dispositif de serrage (1) selon l'une des revendications 6 à 9, **caractérisé en ce que** les sections de blocage (19) de l'agrafe d'enclenchement (18) sont conçues comme deux sections courbes opposées qui sont disposées dans le prolongement des branches parallèles respectives de la partie en U (20).

11. Dispositif de serrage (1) selon l'une des revendications 1 à 10, **caractérisé en ce que** le profil d'enclenchement prévu sur le piston de serrage (4) est conçu comme un profil rainuré avec plusieurs rainures d'enclenchement (17), de préférence des rainures d'enclenchement circulaires (17).

12. Dispositif de serrage (1) selon l'une des revendications 6 à 11, **caractérisé en ce que** l'agrafe d'enclenchement (18) comporte une seconde section en U (20) avec une partie coudée (21), étant précisé que les sections en U (20) sont disposées sur les côtés opposés de la section annulaire (19), et qu'il est prévu deux saillies de guidage (22) qui dépassent de la paroi du boîtier et qui guident axialement les parties coudées (21) des sections en U (20) dans la zone de travail du piston de serrage (4) et empêchent l'agrafe d'enclenchement (21) de tourner.

13. Dispositif de serrage (1) selon la revendication 12, **caractérisé en ce que** les saillies de guidage (22) forment à leur extrémité arrière des butées (24) qui limitent le mouvement axial de l'agrafe d'enclenchement (18) dans le mouvement de désenclenchement.

14. Utilisation d'une agrafe d'enclenchement (18) pour un dispositif d'ajustement pour l'ajustement progressif de la zone de travail d'un piston de serrage (4) d'un dispositif de serrage (1) pour un moyen d'entraînement flexible, en particulier une chaîne d'entraînement d'un moteur à combustion interne, l'agrafe d'enclenchement (18) comporte deux sections de blocage (19) destinées à venir s'accrocher dans le profil d'enclenchement du piston de serrage (4) apte à coulisser dans un boîtier de serrage (2), et une section élastique, étant précisé que la section élastique relie de manière élastique les sections de blocage (19) guidées mobiles dans un plan, latéralement par rapport au piston de serrage (4), pour venir s'accrocher dans le profil d'enclenchement,
**caractérisée en ce que** la section élastique comporte au moins une zone de torsion, conçue comme une barre de torsion, qui relie de manière élastique les sections de blocage (19), étant précisé que l'axe de la barre de torsion est disposé suivant un angle par rapport au plan de l'écartement latéral des sections de blocage (19), et décrit une course élastique de torsion lorsque les sections de blocage (19) s'écartent latéralement dans ce plan.

15. Utilisation d'une agrafe d'enclenchement (18) selon la revendication 14, **caractérisée en ce que** la section élastique décrit une course élastique de flexion lors de l'écartement latéral des sections de blocage (19) dans le plan de l'accrochement dans le profil d'enclenchement, étant précisé que la course élastique de torsion représente une plus grande part du mouvement élastique des sections de blocage que la course élastique de flexion.
